# EUROPÄISCHE PATENTANMELDUNG

(11) **EP 2 354 737 A2**
(43) Veröffentlichungstag der Anmeldung: **10.08.2011**
(21) Anmeldenummer: 10195538.3
(22) Anmeldetag: 17.12.2010
(51) Int. Cl.: F25D 29/00

(54) **Gefriergerät und Kontrollverfahren für das besagte Gefriergerät**

(30) Priorität: 29.12.2009 ES 200931289
(71) Anmelder: BSH Bosch und Siemens Hausgeräte GmbH, 81739 München (DE)
(72) Erfinder: Ruperez Rubio, Jose Angel, 50820 San Juan de Mozarrifar (Zaragoza) (ES)

(57) **Zusammenfassung**

Ein Gefriergerät, das ein Kühlsystem umfasst, das dazu vorgesehen ist, Kühlzyklen durchzuführen und ein thermisch isoliertes Gefrierfach zu kühlen, ein Thermostat, das die maximale Temperatur (Tₐ, T_{c}) im Inneren des Gefrierfachs begrenzt, und eine Programmiereinheit mit einem Zeitgeber. Die Programmiereinheit verfügt über ein Programm zur Speicherung von Energie, in dem im Zeitgeber mindestens eine Talstunde (hᵢ) für den Beginn der Speicherperiode und mindestens eine Spitzenstunde (h_{f}) für das Ende der Speicherperiode programmiert werden können, damit das Gefrierfach während der Speicherperiode auf eine maximale Speichertemperatur (Tₐ) gekühlt wird, die unterhalb der maximalen Gefriertemperatur (T_{c}) außerhalb der Speicherperiode (Pᵣ) liegt.

## Beschreibung

### BEREICH DER ERFINDUNG

Die Erfindung gehört zum Bereich der Gefriergeräte, die ein Kühlsystem umfassen, das dazu vorgesehen ist, Kühlzyklen durchzuführen und ein thermisch isoliertes Gefrierfach zu kühlen, ein Thermostat, welches die maximale Temperatur im Inneren des Gefrierfachs begrenzt, sowie eine Programmiereinheit mit einem Zeitgeber, und gehört weiterhin zum Bereich der Kontrollverfahren von Gefriergeräten.

### STAND DER TECHNIK

Der Strombedarf ist im Verlauf eines Tages nicht gleichmäßig, wobei "Spitzenstunden" mit einem maximalen Bedarf und "Taistunden" mit einem minimalen Bedarf bestehen.

In vielen Ländern gibt es Tarife, die diesen Umstand berücksichtigen und in den kommenden Jahren ist die Einführung von technischen Mitteln vorgesehen, die eine Preisberechnung nach Stunden erlauben, um den Verbrauch während der Talstunden mittels günstigeren Tarifen zu fördern.

Es gibt Gefriergeräte wie das der Patentanmeldung WO 2005059454, bei denen sich die Auftauzyklen derart an den Stromtarif anpassen, dass die Kosten des Stromverbrauchs auf ein Mindestmaß reduziert werden. Diese Geräte verfügen über einen Kompressor zur Durchführung der Kühlzyklen, einen Verdampfer zur Abkühlung des Inneren des Kühlgeräts, eine Auftaueinheit zur Beseitigung des im Verdampfer angesammelten Eises. Weiterhin umfassen diese Geräte eine Kontrollvorrichtung, welche die Arbeitszeiten der Auftaueinheit steuert, wobei die Auftauperioden, in denen eine große Menge an Energie verbraucht wird, an den Zeitpunkt des Beginns und des Endes des seitens der Stromgesellschaft festgelegten günstigsten Tarifs angepasst sind, um den Betriebsverbrauch des Geräts zu reduzieren. Dadurch wird außerdem der Bedarf etwas in Richtung der "Taiperiode" verschoben.

Die Kühlzyklen des Geräts bleiben unverändert, so dass in dieser Hinsicht keine Änderungen der Funktionsweise bestehen. Wie der Verbrauch weiter in Richtung der Talstunden verschoben oder Energie während dieser sogar gespeichert werden kann, ist ein Problem, das bei den Kühl-/Gefriergeräten gelöst werden muss, um deren Effizienz und Stabilität wie angefordert zu verbessern, wobei Spitzen im Stromsystem zu vermeiden sind, welche eine Unterbrechung der Versorgung bedeuten.

### GEGENSTAND DER ERFINDUNG

Der Gegenstand der Erfindung bezieht sich auf ein effizienteres Gefriergerät, durch dessen Betrieb die Stabilität des Stromnetzes begünstigt wird, wobei Spitzen im System vermieden werden, die Unterbrechungen der Versorgung bedeuten.

Diese Aufgabe wird mittels eines Gefriergeräts gelöst, welche ein Kühlsystem umfasst, das dazu vorgesehen ist, Kühlzyklen durchzuführen und ein thermisch isoliertes Gefrierfach zu kühlen, ein Thermostat, welches die maximale Temperatur im Inneren des Gefrierfachs begrenzt, sowie eine Kontrollvorrichtung mit einem Zeitgeber, wobei die Kontrollvorrichtung über ein Programm zur Speicherung der Energie verfügt, bei dem im Zeitgeber mindestens eine Talstunde für den Beginn der Speicherperiode und eine Spitzenstunde für das Ende der Speicherperiode programmiert werden können, um das Gefrierfach während der Speicherperiode auf eine maximale Speichertemperatur zu kühlen, die unter der maximalen Gefriertemperatur außerhalb der Speicherperiode liegt.

Auf diese Weise, wenn das Gefriergerät während der Speicherperiode bei der maximalen Speichertemperatur unter der maximalen Gefriertemperatur arbeitet, ändert die Kontrollvorrichtung bei Erreichen der Spitzezeit die seitens des Thermostats kontrollierte Temperaturbegrenzung, wobei diese auf die maximale Gefriertemperatur erhöht wird, so dass das Kühlsystem während des Zeitraums zu arbeiten aufhört, der zur Erreichung der maximalen Gefriertemperatur im Inneren des Gefrierfachs benötigt wird, ohne dass während des erhöhten Bedarfszeitraums elektrische Energie verbraucht wird. Falls die Stromgesellschaft außerdem für diese Speicherperiode einen reduzierten Tarif anbietet, entsteht eine wirtschaftliche Einsparung für den Benutzer des Gefriergeräts.

In einer bevorzugten Ausführung besitzt die Kontrollvorrichtung Speichermittel zur Speicherung mindestens einer Talstunde, einer Spitzenstunde, einer maximalen Speichertemperatur und einer maximalen Gefriertemperatur, wobei der Betrieb des Geräts erleichtert und dieses bezüglich seines Programms zur Speicherung von Energie effizienter wird.

Vorzugsweise können mindestens die Talstunde, die Spitzenstunde, die maximale Speichertemperatur und/oder die maximale Gefriertemperatur auf den Zeitraum mit niedrigem Bedarf geändert und eingestellt werden, wobei außerdem die gewünschte maximale Temperatur auf die Produkte eingestellt werden kann, die sich im Gefrierfach befinden.

Die Kontrollvorrichtung / Programmiereinheit kann an eine Informationsquelle außerhalb des Gefriergeräts angeschlossen werden, zum Beispiel Internet, um Daten bezüglich der Talstunde und/oder Spitzenstunde zu lesen. Das Stromversorgungsunternehmen kann die Tarifzeiträume von Tag zu Tag oder während desselben Tages ändern und diese Daten senden, damit das Gefriergerät diese empfängt und für die unmittelbare Perioden verwendet.

Das Gerät besitzt ein Bedienungsfeld mit Steuerelementen, die von einem Benutzer betätigt werden können, um mindestens die Talstunde, die Spitzenstunde, die maximale Speichertemperatur und/oder die maximale Gefriertemperatur zu ändern. Auf diese Weise kann der Benutzer das Gerät entsprechend der Information programmieren, welche das Stromunternehmen bezüglich des reduzierten Tarifs seines Vertrages anbietet.

Das Gerät kann ein herkömmliches Gefriergerät vom Typ einer Gefriertruhe mit einem Kühlsystem sein, dass mindestens einen Kompressor, mindestens einen Verdampfer und mindestens einen Kondensator besitzt, oder ein Kühl- und Gefriergerät von der Art, die mindestens ein zweites Gefrierfach besitzen.

Ein zweiter Gegenstand der Erfindung besteht darin, die Gefriergeräte mit einem Kontrollverfahren auszustatten, das die wirtschaftlichen Betriebskosten desselben senkt und erlaubt, die Funktionsweise des Geräts auf den Energiebedarf des Stromnetzes einzustellen.

Dieses Ziel wird mittels eines Kontrollverfahrens eines Gefriergeräts erreicht, wobei das Kühlsystem zwischen der Talstunde und der Spitzenstunde aktiviert wird, wenn die Temperatur im Inneren des Gefrierfachs größer als die maximale Speichertemperatur ist, und wobei das Kühlsystem zwischen der Spitzenstunde und der Talstunde aktiviert wird, wenn die Temperatur im Inneren des Gefrierfachs größer als die maximale Gefriertemperatur ist, wobei die Letztere über der maximalen Speichertemperatur liegt. Ein Kontrollverfahren dieser Art kann in den derzeitigen Gefrier- oder Kühlgeräte implementiert werden, bei denen die Talstunde, die Spitzenstunde, und die maximalen Temperaturen in den Perioden werkseitig eingestellt sein können und es nicht notwendig ist, dass diese vom Benutzer geändert werden.

### BESCHREIBUNG DER ABBILDUNGEN

Die Erfindung wird in der nachfolgenden Beschreibung anhand eines Ausführungsbeispiels erläutert, das vereinfacht in der beiliegenden Abbildung dargestellt wird.

In diesem Fall:

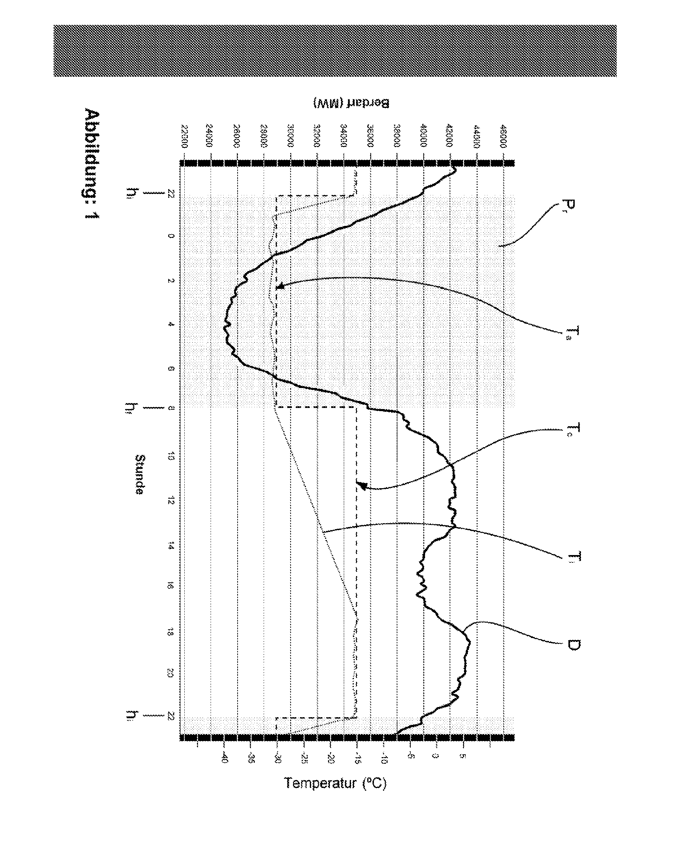

Die Abbildung 1 zeigt eine Graphik, in welcher der Energiebedarf des Stromnetzes gegenüber der Zeit und gleichzeitig die Temperatur gegenüber der Zeit verknüpft dargestellt werden.

### BESCHREIBUNG EINER AUSFÜHRUNG DER ERFINDUNG

Die Abbildung 1 zeigt eine Graphik, in der in einem Zeitraum von etwas mehr als einem Tag der Energiebedarf an das Stromnetz eines Landes überlappt dargestellt ist. Links von der Graphik beginnt die Zeit ca. gegen 21 Uhr, die Kurve des Strombedarfs D beginnt, bis auf dessen Minimum zu sinken, das sich über die Nachtzeit erstreckt und das unter anderem leicht mit der Einstellung der privaten und kommerziellen Aktivitäten in Verbindung gebracht werden kann. Früh am Morgen beginnt dann erneut der Anstieg des Bedarfs und mittags sinkt die Bedarfskurve D wieder leicht, was mit der Einstellung der kommerziellen Tätigkeiten in Beziehung steht, um dann erneut auf ein Maximum bis 20:00 abends zu steigen. Diese Kurve wurde an einem Wochentag im Monat November gemessen. Die Kurve am Wochenende ist unterschiedlich, es kann jedoch ebenfalls ein Tal während der Nachtzeit festgestellt werden.

Diese Information ist für den Betrieb des Gefriergeräts der Erfindung sehr relevant, die ein Kühlsystem umfasst, mit dem die Kühlzyklen zur Kühlung des thermisch isolierten Gefrierfachs ausgeführt werden. Das Gerät besitzt ein Thermostat, welches die maximale Temperatur im Inneren Tᵢ des Gefrierfachs begrenzt, wie auf der Graphik abzulesen ist, sowie eine Kontrollvorrichtung mit einem Zeitgeber wie eine Uhr mit Datum. Die Kontrollvorrichtung verfügt über ein Programm/eine Methode zur Speicherung der Energie, wobei in der Uhr eine Talstunde hᵢ für den Beginn der Speicherperiode Pᵣ und mindestens eine Spitzenstunde hf für das Ende der Speicherperiode Pᵣ programmiert werden, um das Gefrierfach während der Speicherperiode auf eine maximale Speichertemperatur Tₐ zu kühlen, welche niedriger als die maximale Gefriertemperatur T_{c} außerhalb der Speicherperiode ist. In dem Beispiel beginnt die Speicherperiode Pᵣ um 22

Uhr und endet um 8 Uhr, es kann festgestellt werden, wie die Innentemperatur Tᵢ des Gefrierfachs langsam ansteigt, da der Kühlzyklus des Geräts nicht arbeitet, bis dieser gegen ca. 17 Uhr wieder den Betrieb aufnimmt, um das Fach auf der maximalen Gefriertemperatur T_{c} zu halten.

Dieses Verfahren ist vor allem bei den Gefriergeräten mit hoher Energiewirkung A+ und A++ von Vorteil, da deren Isolierung besser ist und somit die Zeitdauer erhöht wird, zu der der Kühlzyklus nicht aktiviert wird. Das Gerät verfügt über eine Kontrollvorrichtung zur Zeitplanung oder sogar über eine Verbindung mit dem Stromversorgungsnetz, die es erlaubt, den größten Teil des Verbrauchs mittels des beschriebenen Programms zu Talzeiten mit geringeren wirtschaftlichen Energiekosten durchzuführen, wobei die maximale Speichertemperatur Tₐ während dieser Talperiode auf den niedrigsten möglichen Wert (zum Beispiel -30° C) gesenkt wird. Dieses bedeutet zunächst einen relativ hohen Energieverbrauch, nicht nur, um diese Temperatur zu erreichen, sondern auch, um diese während der Talperiode aufrecht zu erhalten, wenn jedoch der Energiebedarf des Systems steigt und die Spitzenperiode mit hohen Energiekosten beginnt, springt das Programm auf die höchstmögliche maximale Gefriertemperatur T_{c} (zum Beispiel -15° C), was tatsächlich der Abschaltung des Geräts während eines langen Zeitraums (es handelt sich um Geräte mit einem hohen Grad an Isolierung) und einem niedrigen Verbrauch bezüglich der Aufrechterhaltung während der Spitzenperiode gleichkommt. Es kann gesagt werden, dass diese Verschiebung des Verbrauchs eine "Speicherung" der Energie zu den Talspeicherperioden Pᵣ und einer "Freisetzung" derselben während der Spitzenperioden bedeutet.

Zur Verbesserung der Kapazität bez. der "Speicherung" bzw. "Verschiebung des Energieverbrauchs" könnte im Inneren des Gefrierfachs ein Kältespeicherdepot inkorporiert werden, zum Beispiel mit einer chemischen Zusammensetzung, deren Zustandsänderungs-Temperatur innerhalb des Rangs der maximalen und minimalen Systemtemperaturen liegt, um die Speicherung von Energie im Inneren des Gefrierfach zu unterstützen.

Das Ergebnis der Einführung dieser Erfindung in einen Park von Millionen Gefriergeräten hätte multiple positive Auswirkungen, zum Beispiel niedrigere Betriebskosten des Geräts für den Benutzer, eine größere Effizienz für das Stromsystem, eine höhere Rentabilität der getätigten Investitionen bezüglich der Systeme für die Erzeugung und den Transport von Energie, eine geringere Notwendigkeit, eventuelle Bedarfsanstiege aufzufangen und eine größere Stabilität des Systems aufgrund der Bedarfsreduzierung zu Spitzenzeiten, sowie eine geringere Umweltbelastung für die Gesellschaft im Allgemeinen.

Die Kosten für die Implementierung dieser Anwendung bei den derzeitigen Geräte sind gering, da der größte Teil der Kosten, die mit dem hohen Grad an Isolierung verbunden sind, bei den Geräten der Klasse A+ y A++ bereits akzeptiert ist.

Obwohl die Anwendung bei Gefriergeräten technisch eher durchführbar und daher rentabler ist, da der Temperaturbereich des Systems mehr variiert, ist die Anwendung der Erfindung in Kühlgeräten ebenfalls vorstellbar, da diese ebenfalls eine wenn auch geringere Verschiebung des Bedarfs des Stromnetzes bedeuten würde.

## Patentansprüche

1. Ein Gefriergerät, das Folgendes umfasst
ein Kühlsystem, das dazu vorgesehen ist, Kühlzyklen durchzuführen und ein thermisch isoliertes Gefrierfach zu kühlen,
ein Thermostat, das die maximale Temperatur (Tₐ, T_{c}) im Inneren des Gefrierfach begrenzt, und
eine Kontrollvorrichtung mit einem Zeitgeber
**dadurch gekennzeichnet, dass**
die Kontrollvorrichtung über ein Programm zur Speicherung von Energie verfügt, in dem im Zeitgeber mindestens eine Talstunde (hᵢ) für den Beginn der Speicherperiode und mindestens eine Spitzenstunde (hf) für das Ende der Speicherperiode programmiert werden können, damit das Gefrierfach während der Speicherperiode auf eine maximale Speichertemperatur (Tₐ) gekühlt wird, die unterhalb der maximalen Gefriertemperatur (T_{c}) außerhalb der Speicherperiode (Pᵣ) liegt.

2. Gefriergerät nach Anspruch 1, **dadurch gekennzeichnet, dass** die Kontrollvorrichtung Speichermittel besitzt, um mindestens eine Talstunde, eine Spitzenstunde, eine maximale Speichertemperatur (Tₐ) und/oder eine maximale Gefriertemperatur (T_{c}) zu speichern.

3. Gefriergerät nach einem der vorherigen Ansprüche, **dadurch gekennzeichnet, dass** mindestens die Talstunde (hᵢ), die Spitzenstunde (h_{f}), die maximale Speichertemperatur (Tₐ) und/oder die maximale Gefriertemperatur (T_{c}) variiert werden können.

4. Gefriergerät nach einem der vorherigen Ansprüche, **dadurch gekennzeichnet, dass** die Programmiereinheit an eine Informationsquelle außerhalb des Gefriergeräts angeschlossen werden kann, zum Beispiel Internet, um Daten bezüglich der Talstunde und/oder Spitzenstunde zu lesen.

5. Gefriergerät nach einem der vorherigen Ansprüche, **dadurch gekennzeichnet, dass** diese ein Bedienungsfeld mit Steuerelementen besitzt, die von einem Benutzer betätigt werden können, um mindestens die Talstunde (hᵢ), die Spitzenstunde (h_{f}), die maximale Speichertemperatur (Tₐ) und/oder die maximale Gefriertemperatur (T_{c}) zu ändern.

6. Gefriergerät nach einem der vorherigen Ansprüche, **dadurch gekennzeichnet, dass** das Kühlsystem mindestens einen Kompressor, mindestens einen Verdampfer und mindestens einen Kondensator besitzt.

7. Gefriergerät nach einem der vorherigen Ansprüche, **dadurch gekennzeichnet, dass** dieses Teil eines Kühlgeräts mit einem zweiten Gefrierfach bildet.

8. Kontrollverfahren eines Gefriergeräts nach den vorherigen Ansprüchen, **dadurch gekennzeichnet, dass** das Kühlsystem zwischen der Talstunde (hᵢ) und der Spitzenstunde (h_{f}) aktiviert wird, wenn die Temperatur im Inneren (Tᵢ) des Gefrierfachs höher als die maximale Speichertemperatur (Tₐ) ist, und dass das Kühlsystem zwischen der Spitzenstunde (h_{f}) und der Talstunde (hᵢ) aktiviert wird, wenn die Temperatur im Inneren (Ti) des Gefrierfachs höher als die maximale Gefriertemperatur (T_{c}) liegt, wobei diese höher als die maximale Speichertemperatur (Tₐ) ist.
